# EUROPÄISCHE PATENTSCHRIFT

(11) **EP 2 062 679 B1**
(45) Veröffentlichungstag und Bekanntmachung des Hinweises auf die Patenterteilung: **07.01.2015**
(21) Anmeldenummer: 07405335.6
(22) Anmeldetag: 26.11.2007
(51) Int. Cl.: B23K 26/14

(54) **Bearbeitungskopf einer Laserbearbeitungsmaschine mit einer Zuführung von Gas und einer Kompensationseinrichtung zur Kompensation der von zugeführtem Gas übertragenen Kräfte**
Processing head of a laser processing machine with a gas supply and a compensation system for balancing the forces exerted by the supplied gas
Tête d'usinage d'une machine d'usinage au laser avec en approvisionnement en gaz et un dispositif de compensation destiné à compenser des forces transmises par le gaz

(43) Veröffentlichungstag der Anmeldung: 27.05.2009
(73) Patentinhaber: Bystronic Laser AG, CH-3362 Niederönz (CH)
(72) Erfinder: Belletti, Marco, 3377 Walliswil bei Wangen (CH)
(74) Vertreter: Patentbüro Paul Rosenich AG

(56) Entgegenhaltungen:
- EP-A- 1 652 614
- EP-A- 1 743 726
- DE-A1- 4 129 278
- US-B1- 6 204 473

## Beschreibung

Die Erfindung bezieht sich auf einen Bearbeitungskopf für eine Laserbearbeitungsmaschine zur Bearbeitung eines Werkstücks mittels eines Laserstrahls.

Ein Bearbeitungskopf einer Laserbearbeitungsmaschine stellt das letzte Element einer Strahlführung eines Laserstrahls dar, der zur Bearbeitung eines Werkstücks mittels der Laserbearbeitungsmaschine verwendet wird. Ein Bearbeitungskopf hat in der Regel die Aufgabe, den Laserstrahl auf das zu bearbeitende Werkstück bzw. die zu bearbeitenden Werkstücke zu fokussieren und gegebenenfalls zusätzlich ein Prozessgas oder mehrere verschiedene Prozessgase in die Umgebung des Fokuspunkts des jeweiligen Laserstrahls zu lenken, um die vom Laserstrahl induzierten Bearbeitungsprozesse (beispielsweise Schneiden eines Werkstücks, Verschweissen mehrerer Werkstücke, Herstellung von Gravuren auf Oberflächen, o. ä.) mit Hilfe des jeweiligen Prozessgases zu beeinflussen. Ein Bearbeitungskopf umfasst deshalb in der Regel zumindest eine Fokussierungsoptik und einen Verstellmechanismus, welcher dazu dient, die Fokussierungsoptik zu bewegen bzw. zu verstellen, um den Abstand der Fokussierungsoptik relativ zu dem zu bearbeitenden Werkstück verändern und somit die Lage des Fokuspunkts relativ zum Werkstück beeinflussen zu können. Weiterhin umfasst ein Bearbeitungskopf in Regel eine Reihe von Sensoren zur Erfassung verschiedener Betriebsparameter (beispielsweise zur Kontrolle der Position des Bearbeitungskopfes, zur Überwachung der Qualität des jeweiligen Ergebnisses einer Bearbeitung mit dem Laserstrahl, zur Überwachung der Integrität der Fokussierungsoptik, o. ä.), eine Elektronik zur Verarbeitung der jeweiligen Sensorsignale und zur Kommunikation mit einer Steuerung der Laserbearbeitungsmaschine und eine Zuführung verschiedener Medien (beispielsweise Energie und/oder Kühlmittel und/oder Prozessgase zur Beeinflussung von Bearbeitungsprozessen und/oder Gase zum Reinigen und Kühlen der Fokussierungsoptik).

Im Hinblick auf eine Zuführung von Gasen muss bei einer Konstruktion eines Bearbeitungskopfes berücksichtigt werden, dass diese Gase im Betrieb einer Laserbearbeitungsmaschine unter Überdruck, unter Umständen unter einem hohen Druck, zugeführt werden und in der Regel in einen Raumbereich eingeleitet werden, der unmittelbar an die Fokussierungsoptik angrenzt. Die zugeführten Gase können deshalb Kräfte auf die Fokussierungsoptik übertragen. Prozessgase, die zur Beeinflussung von Bearbeitungsprozessen von einem Bearbeitungskopf aus auf ein zu bearbeitendes Werkstück gelenkt werden, werden beispielsweise mit einem Druck im Bereich von 0.1 bis ca. 30 bar zugeführt und können deshalb Kräfte auf die Fokussierungsoptik übertragen, die einerseits hohe Werte erreichen können, andererseits aber auch (je nach Anwendung) über einen grossen Bereich variieren können. Da bei einer Bearbeitung eines Werkstücks die Position der Fokussierungsoptik jeweils präzise kontrolliert werden muss und gegebenenfalls die Position der Fokussierungsoptik gezielt verändert werden muss, ist es deshalb erforderlich, die von den zugeführten Gasen übertragenen Kräfte beim Verstellen der Fokussierungsoptik zu berücksichtigen.

Zu dieser Thematik sind bereits mehrere Konzepte bekannt.

Aus DE 41 29 278 A1 ist beispielsweise ein Bearbeitungskopf einer Laserbearbeitungsmaschine bekannt, dessen Fokussierungsoptik pneumatisch verstellt werden kann. Die Fokussierungsoptik ist an einer bewegbar gelagerten Linsenhalterung befestigt, die an entgegengesetzten Enden, d. h. an der Austrittsseite des Laserstrahls und an der Eintrittsseite des Laserstrahls, jeweils eine Kolbenfläche aufweist. Beide Kolbenflächen sind jeweils in einer mit einem Gas beflutbaren Gas-Kammer geführt. Im vorliegenden Beispiel wird eine der Gas-Kammern mit dem zur Bearbeitung des jeweiligen Werkstück benötigten Prozessgas beflutet, und zwar unter dem Arbeitsdruck, der bei der jeweiligen Bearbeitung realisiert sein muss. Die andere Gas-Kammer wird mit einem Steuergas (beispielsweise Druckluft oder Prozessgas) gefüllt, wobei der Druck des Steuergases in der der anderen Kammer - abhängig vom (Arbeits-) Druck des Prozessgases in der einen Gas-Kammer - geregelt werden muss, um die Fokussierungsoptik gezielt automatisch verstellen zu können. Dieser Verstellmechanismus zum Verstellen der Fokussierungsoptik hat verschiedene Nachteile. Beispielsweise muss das Steuergas ebenfalls unter einem hohen Druck stehen, um eine genaue Verstellung der Fokussierungsoptik gegen den unter Umständen hohen Druck des Prozessgases verstellen zu können. Zur genauen Kontrolle des Drucks des Steuergases in der jeweiligen Gas-Kammer ist deshalb eine komplizierte Regelung nötig. Weiterhin ist eine Verstellung der Fokussierungsoptik unmöglich oder kaum praktikabel, wenn kein Prozessgas benötigt wird oder das Prozessgas nur unter einem Druck steht, der zu gering ist, um die Fokussierungsoptik gegen ihre Gewichtskraft zu bewegen.

Aus DE 196 28 857 A1 ist ein Bearbeitungskopf einer Laserbearbeitungsmaschine bekannt, dessen Fokussierungsoptik mit einer Antriebseinrichtung verstellbar ist. Als Antriebseinrichtung wird eine manuelle, elektromechanische oder pneumatische Antriebseinrichtung vorgeschlagen, wobei hinsichtlich einer pneumatischen Antriebseinrichtung allerdings kein konkreter Vorschlag vorliegt, wie eine solche Antriebseinrichtung implementiert werden könnte. Als Zuführung eines Prozessgases ist ein Druckraum vorgesehen, welcher an der Fokussierungsoptik auf der Austrittseite des Laserstrahls angeordnet ist und in welchen ein unter Druck stehendes Prozessgas einleitbar ist. Um den Einfluss von Kräften, die von dem Prozessgas auf die Fokussierungsoptik übertragen werden, weitgehend zu unterdrücken, ist eine Kompensationseinrichtung vorgesehen, welche für eine Kompensation dieser prozessgasbedingten Kräfte sorgen soll. Zu diesem Zweck weist eine bewegbare Trägereinheit, welche die Fokussierungsoptik trägt, auf der Eintrittseite des Laserstrahls eine Kolbenfläche auf, welche in eine Gas-Kammer ragt. In diese Gas-Kammer ist ein Gas einleitbar, wobei der Druck dieses Gases so gewählt wird, dass die Trägereinheit der Fokussierungsoptik im Gleichgewicht gehalten wird. Prinzipiell ist es möglich, den Druckraum und die Gas-Kammer über getrennte Leitungen mit unter Druck stehendem Gas zu versorgen. Diese Lösung hat allerdings den Nachteil, dass eine komplizierte Regelung benötigt wird, um den Druck in der Gas-Kammer auf den momentanen Druck des Prozessgases in der Druckkammer abzustimmen und die Fokussierungsoptik im Gleichgewicht zu halten. Gemäss einer alternativen Ausführungsform der Kompensationseinrichtung kommunizieren der Druckraum und die DruckKammer über mindestens einen Verbindungskanal, der sich im Innern des Bearbeitungskopfes befindet. Auf diese Weise ist ein einfacher Druckausgleich zwischen dem Druckraum und der Gas-Kammer möglich. Aber auch diese Lösung hat wesentliche Nachteile. Beispielsweise bilden die Gas-Kammer und der Verbindungskanal zwischen der Gas-Kammer und dem Druckraum einen "toten" Raum, in dem das jeweils eingeleitete Prozessgas über eine lange Zeit gespeichert werden kann. Dies ist von Nachteil, wenn im Betrieb der Laserbearbeitungsmaschine ein Prozessgas-Wechsel notwendig wird, d. h. ein Ersatz eines in einem ersten Bearbeitungsschritt verwendeten ersten Prozessgases durch ein zweites (verschiedenes) Prozessgas in einem zweiten (folgenden) Bearbeitungsschritt. Bei einem derartigen Prozessgas-Wechsel kann ein in der Gas-Kammer und/oder dem Verbindungskanal vorhandener Rest des ersten Prozessgases das zweite Prozessgas über eine lange Zeit verunreinigen und somit die Durchführung des zweiten Bearbeitungsschrittes beeinträchtigen, zumal bereits geringe Verunreinigungen eines Prozessgases zu unakzeptablen Ergebnissen führen können. Eine spezielle Reinigung der Gas-Kammer und des Verbindungskanals, um diese vor einem Prozessgas-Wechsel von Resten eines zuvor eingeleiteten Prozessgases zu befreien, wäre im vorliegenden Fall allerdings aufwändig und zeitraubend. Bei einem Prozessgas-Wechsel geht deshalb viel Zeit verloren, ehe ein normaler Betrieb der Laserbearbeitungsmaschine (ohne Beeinträchtigung durch verunreinigte Prozessgase) möglich wird. Ein weiterer Nachteil ist darin zu sehen, dass die Kompensationseinrichtung viel Platz beansprucht, zumal der Druckraum und die Gas-Kammer in der Nähe der Fokussierungsoptik sowohl auf der Eintrittsseite des Laserstrahls als auch auf der Austrittsseite des Laserstrahl Raum einnehmen und zusätzlich Platz für den Verbindungskanal benötigt wird. Dies erschwert zusätzlich die Integration einer Zuführung für weitere Gase, z. B. für ein Gas, das in einen Raumbereich an der Eintrittsseite des Laserstrahls eingeleitet werden soll.

Ferner ist an Bearbeitungskopf mit den Merkmalen des Oberbegriffs des Anspruchs 1 aus der EP-A-1 743 726 bekannt.

Der vorliegenden Erfindung liegt die Aufgabe zugrunde, die genannten Nachteile zu vermeiden und einen Bearbeitungskopf einer Laserbearbeitungsmaschine mit einer Kompensationseinrichtung zur Kompensation der von zugeführtem Gas übertragenen Kräfte vorzuschlagen, dessen Kompensationseinrichtung wenig Platz beansprucht und einen schnellen Gas-Wechsel zulässt.

Diese Aufgabe wird gemäss der Erfindung gelöst durch einen Bearbeitungskopf mit den Merkmalen des Patentanspruchs 1.

Gemäss der Erfindung ist die Gas-Kammer in die Zuführung derart integriert, dass die Gas-Kammer mit zu der jeweiligen Austrittsöffnung geleitetem Gas durch mindestens eine Eintrittsöffnung der Gas-Kammer beflutbar ist, wobei das Gas nach Durchqueren der jeweiligen Eintrittsöffnung die Gas-Kammer durchströmen muss, um zu der jeweiligen Austrittsöffnung zu gelangen.

Dadurch, dass die Gas-Kammer Teil der Zuführung ist und von einem in die Gas-Kammer geleiteten Gas zwangsweise durchströmt wird, kann die Gas-Kammer (im Gegensatz zu dem aus DE 196 28 857 A1 Vorschlag für eine Kompensationseinrichtung) keinen "toten" Raum bilden, in dem nach der Einspeisung eines ersten Gases in die Zuführung über eine lange Zeit Reste dieses ersten Gases gespeichert werden, wenn die Einspeisung dieses ersten Gases gestoppt und (bei einem Gas-Wechsel) anstelle des ersten Gases ein zweites (anderes) Gas in die Zuführung eingeleitet wird. Bei einem Gas-Wechsel kann die Gas-Kammer rasch durch das zweite Gas "gespült" (gereinigt) und somit von Resten des ersten Gases befreit werden. Ein Gas-Wechsel kann deshalb relativ schnell vollzogen werden.

Die erfindungsgemässe Integration der Gas-Kammer in die Zuführung ermöglicht es, die Gas-Kammer in unmittelbarer Nähe der Austrittsöffnung anzuordnen, aus der Gas aus der jeweiligen Zuführung in Form eines Gasstroms in einen an die Fokussierungsoptik angrenzenden Raumbereich einleitbar ist. Die jeweilige Kompensationseinrichtung benötigt deshalb wenig Platz. Dementsprechend ist es ohne Weiteres möglich, den Bearbeitungskopf mit mehreren Zuführungen für Gas auszustatten und für jede einzelne Zuführung eine Kompensationsvorrichtung vorzusehen, die gemäss der Erfindung in die jeweilige Zuführung integriert ist.

Die jeweilige Austrittsöffnung der jeweiligen Zuführung für ein Gas kann in einem vorgegebenen Abstand zur Fokussierungsoptik angeordnet sein, sodass die räumliche Anordnung der Austrittsöffnung relativ zur Fokussierungsoptik nicht veränderbar ist, falls die Fokussierungsoptik bewegt bzw. verstellt wird. Diese Variante hat den Vorteil, dass der jeweilige Gasstrom, der durch die Austrittsöffnung strömt, immer derselben Bahn relativ zur Fokussierungsoptik folgt, selbst wenn die Fokussierungsoptik mithilfe der Antriebseinrichtung bewegt oder verstellt wird. Dies hat mehrere Vorteile. Einerseits werden störende Wechselwirkungen zwischen dem jeweiligen Gasstrom und dem Betrieb der Antriebseinrichtung vermieden. Weiterhin ist der Einfluss des Gasstroms auf die Fokussierungsoptik unabhängig von der momentanen Position der Fokussierungsoptik. Dies gilt beispielsweise für die Kühlwirkung oder die reinigende Wirkung des Gases auf die Fokussierungsoptik.

Da die Kompensationseinrichtung dafür sorgt, dass die von zugeführtem Gas übertragenen Kräfte kompensiert werden, muss die Antriebseinheit lediglich in der Lage sein, die Masse der Fokussierungsoptik zu bewegen und ggf. zu halten. Der erfindungsgemässe Bearbeitungskopf ist mit einer fluidischen (pneumatischen oder hydraulischen) Antriebseinheit ausgestattet, da diese Antriebseinheit gewöhnlich ebenfalls Kolbenflächen umfasst, die mit einem unter Druck stehenden Fluid beaufschlagt werden, und deshalb mit ähnlichen technischen Mitteln realisiert werden kann wie die Kompensationseinrichtung. Ein fluidischer Antrieb ermöglicht insbesondere eine kompakte Bauweise und eine schnelle und präzise Verstellung der Fokussierungsoptik.

Der erfindungsgemässe Bearbeitungskopf kann modular aufgebaut sein, d. h., der Bearbeitungskopf kann einen stationären Teil und ein auswechselbares Wechsel-Modul umfassen. Unter dem Begriff "stationärer Teil" des Bearbeitungskopfes werden hier alle Komponenten des Bearbeitungskopfes mit Ausnahme des Wechsel-Moduls verstanden, d. h. alle Komponenten des Bearbeitungskopfes, von denen das jeweilige Wechsel-Modul (beim Entfernen des jeweiligen Wechsel-Moduls vom "stationären Teil") als Ganzes getrennt werden kann, ohne dass der "stationären Teil" in Einzelteile zerlegt werden muss. In einer Variante kann das Wechsel-Modul die Fokussierungsoptik und die jeweilige Kompensationseinrichtung umfassen. Gemäss einer Weiterentwicklung dieser Variante umfasst das Wechsel-Modul zusätzlich die jeweiligen angetriebenen Teile der Antriebseinrichtung, wobei angenommen wird, dass die Antriebseinrichtung mindestens ein angetriebenes Teil umfasst. Diese modulare Bauweise vereinfacht die Wartung und den Austausch der Fokussierungsoptik, der Antriebseinrichtung und der Kompensationseinrichtung.

Weitere Einzelheiten der Erfindung und insbesondere beispielhafte Ausführungsformen der Erfindung werden im Folgenden anhand der beigefügten Zeichnungen erläutert. Es zeigen:
- Fig. 1: eine Laserbearbeitungsmaschine zur Bearbeitung eines Werkstücks mittels eines Laserstrahls, mit einem modularen Bearbeitungskopf, wobei ein WechselModul mit einer Fokussierungsoptik in eine stationären Betriebsposition bezüglich des stationären Teils des Bearbeitungskopfes gebracht ist;
- Fig. 2: der Bearbeitungskopf gemäss Fig. 1, wobei das Wechsel-Modul aus der stationären Betriebsposition entfernt und von dem stationären Teil des Bearbeitungskopfes getrennt ist;
- Fig. 3: der Bearbeitungskopf gemäss Fig. 1, in einer 3D-Darstellung, wobei der Bearbeitungskopf in einem Schnitt entlang der Ausbreitungsrichtung des Laserstrahls dargestellt ist;
- Fig. 4: der Bearbeitungskopf gemäss Fig. 1, in einem Schnitt entlang der Ausbreitungsrichtung des Laserstrahls;
- Fig. 5: ein Wechsel-Modul für den Bearbeitungskopf gemäss Fig. 1, wobei das Wechsel-Modul in einem Schnitt entlang der Ausbreitungsrichtung des Laserstrahls dargestellt ist;
- Fig. 6: das Wechsel-Modul gemäss Fig. 4, in einem Schnitt entlang der Ausbreitungsrichtung des Laserstrahls, zusammen mit einem fluidischen Antrieb zum Bewegen einer Fokussierungsoptik.

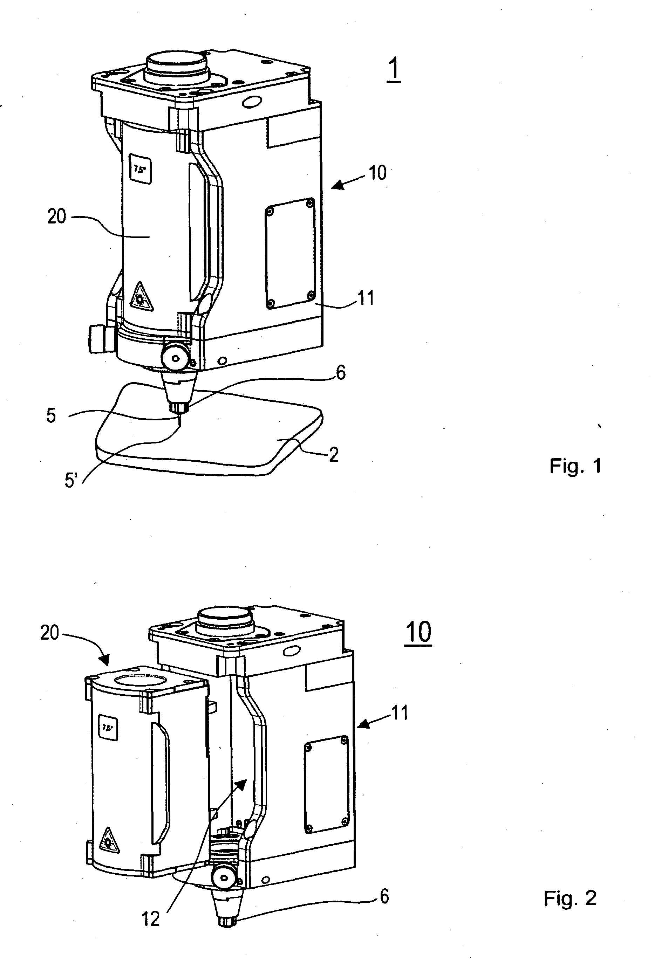

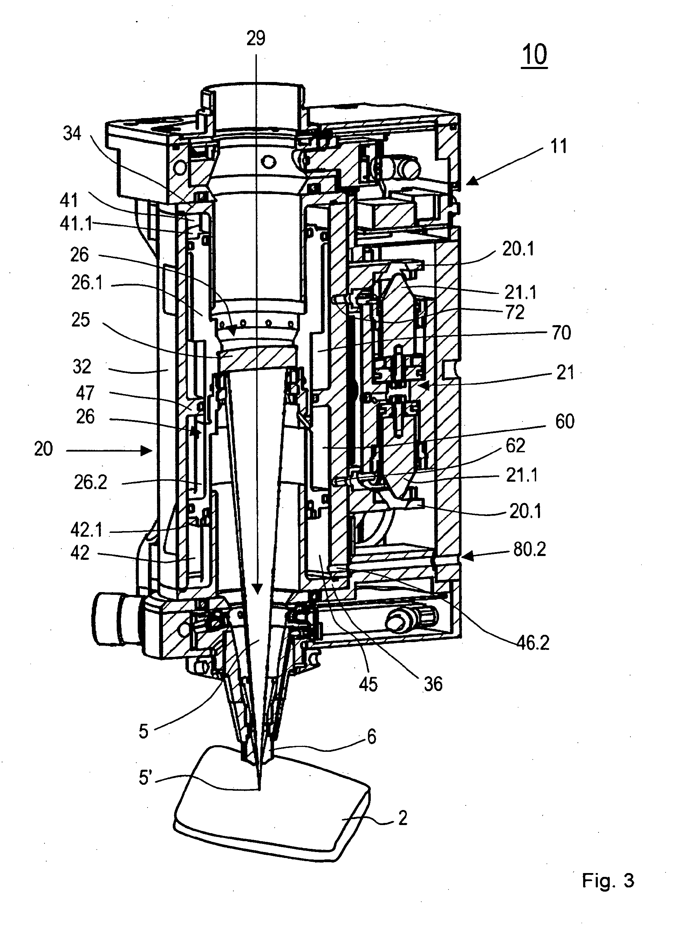

In Fig. 1 zeigt eine Laserbearbeitungsmaschine 1, die mit einem erfindungsgemässen Bearbeitungskopf 10 ausgestattet ist. Die Laserbearbeitungsmaschine 1 ist im vorliegenden Beispiel im Betrieb bei einer Bearbeitung eines Werkstücks 2 mittels eines Laserstrahls 5 dargestellt, wobei der Laserstrahl 5 aus einer (in Fig. 2 und 3 erkennbaren) Austrittsöffnung einer Düse 6 austritt. Der Laserstrahl 5 ist im vorliegenden Fall mittels einer Fokussierungsoptik, die im Zusammenhang mit den Fig. 3-5 noch erläutert wird, auf eine Oberfläche des Werkstücks 2 fokussiert (eine Oberfläche des Werkstücks 2 befindet sich im Fokus 5' der Fokussieroptik). Die Düse 6 erlaubt es ausserdem, einen Strom eines Prozessgases in der Umgebung des Laserstrahls 5 auf das Werkstück 2 zu lenken, um die Bearbeitung des Werkstücks 2 mithilfe des Prozessgases beeinflussen zu können. Die Laserbearbeitungsmaschine 1 ist in Fig. 1 vereinfacht dargestellt: Der Bearbeitungskopf 10 ist relativ zum Werkstück 2 bewegbar, beispielsweise mithilfe eines in Fig. 1 nicht dargestellten Roboterarms.

Wie Fig. 1 und 2 zeigen, umfasst der Bearbeitungskopf 10 einen stationären Teil 11 in der Form eines an einer Seite offenen Gehäuses, welches einen Raum 12 für ein Wechsel-Modul 20 umschliesst. Das Wechsel-Modul 20 ist in den Raum 12 senkrecht zur Ausbreitungsrichtung 5.1 des Laserstrahls 5 einschiebbar und entsprechend herausziehbar. In der Darstellung gemäss Fig. 1 befindet sich das Wechsel-Modul 20 in einer stationären Betriebsposition bezüglich des stationären Teils 11 des Bearbeitungskopfes 10. Fig. 2 zeigt, dass das Wechsel-Modul 20 als Ganzes vom stationären Teil 11 des Bearbeitungskopfes 10 getrennt werden kann, ohne dass der stationäre Teil in Einzelteile zerlegt werden muss.

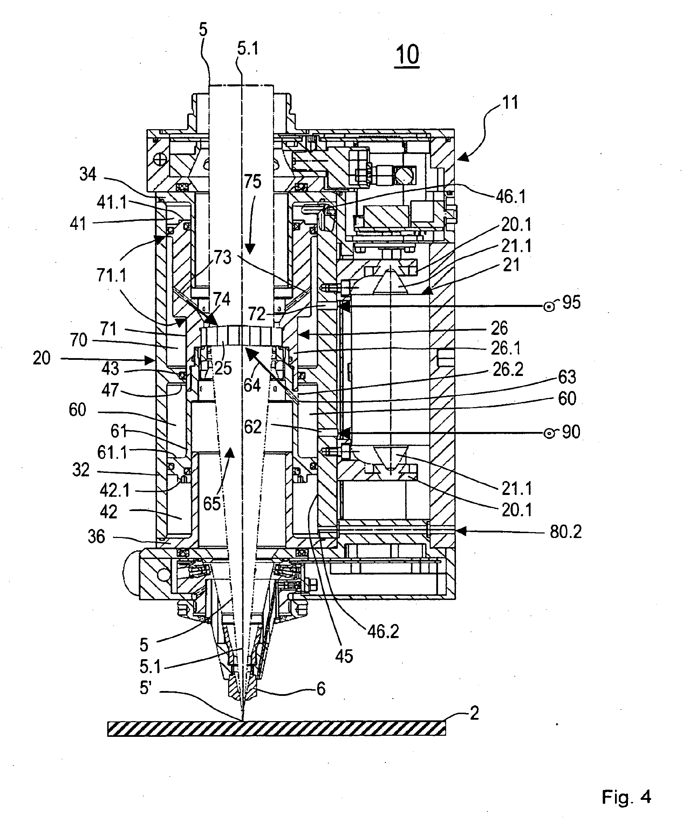

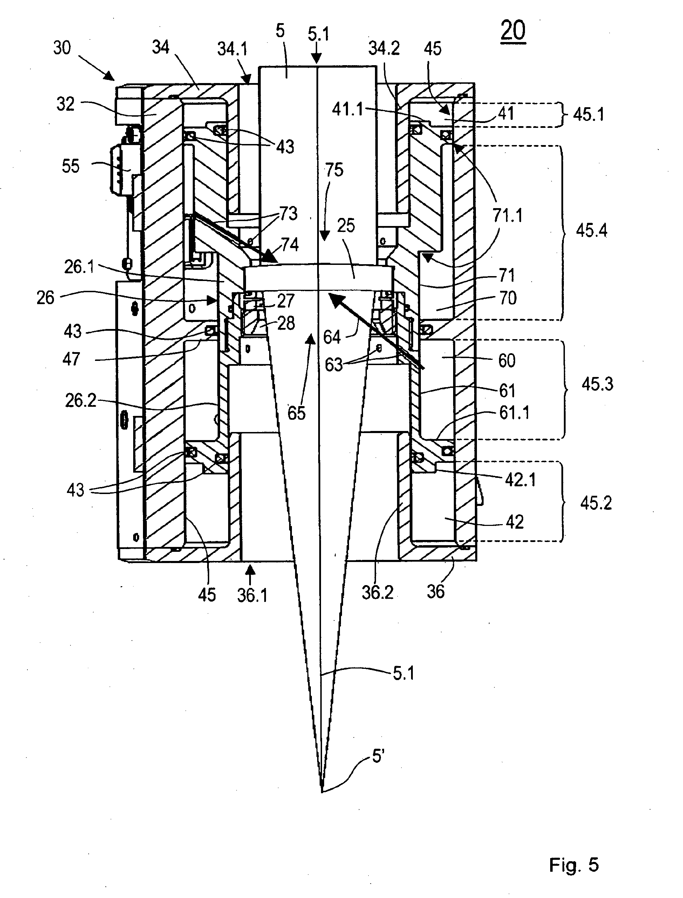

Die Fig. 3 und 4 zeigen bauliche Einzelheiten des stationären Teils 11 des Bearbeitungskopfes 10 und des Wechselmoduls 20, wobei das Wechsel-Modul 20 in einer stationären Betriebsposition bezüglich des stationären Teils 11 dargestellt ist. Fig. 5 zeigt das vom stationären Teil 11 getrennte Wechsel-Modul 20 separat, wobei weitere (in den Fig. 3 und 4 nicht erkennbare) Einzelheiten des Wechsel-Moduls 20 sichtbar gemacht sind.

Um das jeweilige Wechsel-Modul 20 präzise in die stationäre Betriebsposition bringen und in der stationären Betriebsposition halten zu können, ist der stationäre Teil 11 des Bearbeitungskopfes 10 mit einer Zentrier- und Haltvorrichtung 21 für das Wechsel-Modul 20 versehen. Die Haltevorrichtung 21 umfasst zwei jeweils an einem Ende konisch ausgebildete Zentrierstifte 21.1, die mithilfe einer (nicht dargestellten) Steuerung derart bewegbar sind, dass sie jeweils mit ihrem konischen Ende in entsprechende Zentrierbohrungen eingreifen können, welche in den beiden Armen 20.1, die an einer äusseren Seite des Wechsel-Moduls 20 befestigt sind, ausgebildet sind (Fig. 3). Durch Hineinbewegen der Zentrierstifte 21.1 in die genannten Zentrierbohrungen in den Armen 20.1 kann das Wechsel-Modul 20 zentriert, in die stationäre Betriebsposition gebracht und in der stationären Betriebsposition gehalten werden. Entsprechend können die beiden Zentrierstifte 21.1 aus den Zentrierbohrungen in den Armen 20.1 herausbewegt werden, um die Arme 20.1 freizugeben und ein Entfernen des Wechsel-Moduls 20 aus dem Raum 12 zu ermöglichen.

Wie die Fig. 3-5 zeigen, umfasst das Wechsel-Modul 20 eine Fokussierungsoptik 25, die im vorliegenden Beispiel aus einer Linse besteht. Die Fokussierungsoptik 25 ist so angeordnet, dass die optische Achse der Fokussierungsoptik 25 mit der Ausbreitungsrichtung 5.1 des Laserstrahls 5 zusammenfällt (koaxiale Anordnung), wenn das Wechsel-Modul 20 in die stationäre Betriebsposition gebracht ist.

Um zu erreichen, dass der Laserstrahl 5 auf unterschiedliche Distanzen bezüglich der Düse 6 fokussiert werden kann, ist die Fokussierungsoptik 25 weiterhin so angeordnet, dass ihr Fokus 5' entlang der Ausbreitungsrichtung 5.1 des Laserstrahls bzw. der optischen Achse der Fokussierungsoptik 25 (koaxial) bewegbar ist, wenn das Wechsel-Modul 20 in die stationäre Betriebsposition gebracht ist.

Zu diesem Zweck umfasst das Wechsel-Modul 20 eine Tragstruktur 30 für die Fokussierungsoptik 25, welche eine Bewegung der Fokussierungsoptik 25 koaxial zur Ausbreitungsrichtung 5.1 zulässt, wenn das Wechsel-Modul (und somit auch die Tragstruktur 30) in die stationäre Betriebsposition gebracht ist.

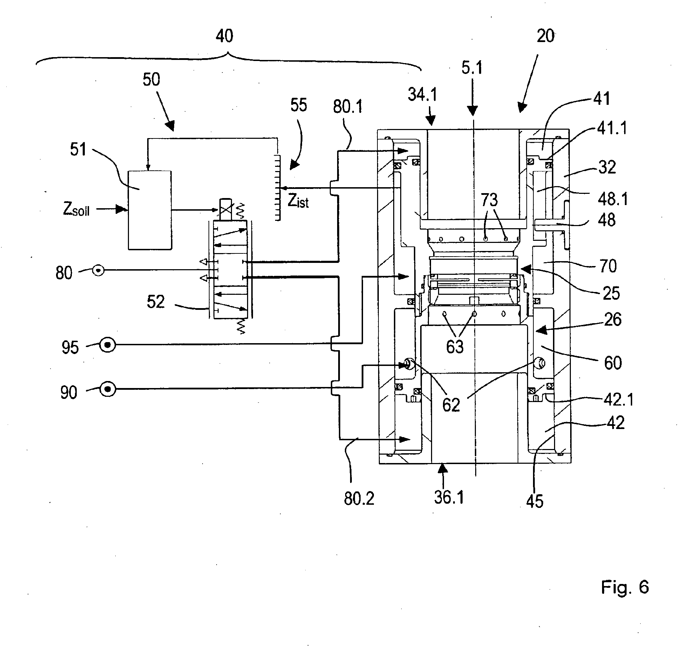

Die Tragstruktur 30 hat mehrere Funktionen: Sie dient als ein Gehäuse des Wechsel-Moduls 20 und zur Führung der Fokussierungsoptik 25 bei einer Bewegung der Fokussierungsoptik 25 entlang der Ausbreitungsrichtung 5' des Laserstrahls 5 und sie bildet weiterhin einen Teil einer fluidisch betätigbaren Antriebseinrichtung 40 (Fig. 6) zum Bewegen der Fokussierungsoptik 25.

Wie die Fig. 5 in Verbindung mit den Fig. 3, 4 und 6 zeigt, ist die Tragstruktur 30 als ein Hohlkörper ausgebildet und umfasst:
eine Seitenwand 32, die einen zylindrischen Hohlraum seitlich begrenzt, wobei die Innenseite der Seitenwand 32 eine Hohlraumwand 45 bildet, die - bezogen auf die Längsrichtung der Seitenwand 32 - einen kreisförmigen Querschnitt aufweist;
eine Verschlussplatte 34, die an einem Ende der Seitenwand 32 befestigt ist und eine kreisförmige Eintrittsöffnung 34.1 für den Laserstrahl 5 aufweist, wobei an die Verschlussplatte 34 ein Rohr 34.2 mit rundem Querschnitt angesetzt ist, welches koaxial zur Hohlraumwand 45 angeordnet ist und die Eintrittsöffnung 34.1 umgibt;
eine Verschlussplatte 36, die an dem anderen Ende der Seitenwand 32 befestigt ist und eine kreisförmige Austrittsöffnung 36.1 für den Laserstrahl 5 aufweist, wobei an die Verschlussplatte 36 ein Rohr 36.2 mit rundem Querschnitt angesetzt ist, welches koaxial zur Hohlraumwand 45 angeordnet ist und die Austrittsöffnung 36.1 umgibt. Die Verschlussplatte 34 begrenzt das Wechsel-Modul 20 auf der Eintrittsseite des Laserstrahls 5 und die Verschlussplatte 36 begrenzt das Wechsel-Modul 20 auf der Austrittsseite des Laserstrahls 5.

Wie die Fig. 3-5 andeuten, sind das Rohr 34.2 und das Rohr 36.2 jeweils derart bezüglich der Hohlraumwand 45 angeordnet, dass zwischen der Hohlraumwand 45 und jedem der Rohre 34.2 und 36.2 jeweils ein ringförmiger Spalt ausgebildet ist. Die Fig. 3-5 zeigen weiterhin, dass die Hohlraumwand 45, die Eintrittsöffnung 34.1, die kreisförmige Austrittsöffnung 36.1 und die Rohre 34.2 und 36.2 jeweils koaxial bzw. konzentrisch bezüglich der Ausbreitungsrichtung 5.1 angeordnet sind, wenn sich das Wechsel-Modul 20 in der stationären Betriebsposition befindet.

Die Fokussierungsoptik 25 ist in eine Linsenfassung 26 eingebaut, welche aus montagetechnischen Gründen aus zwei rohrförmigen Teilstücken 26.1 und 26.2 zusammengesetzt ist und einen Durchgangskanal 29 für den Laserstrahl 5 aufweist (Fig. 3). Die Fokussierungsoptik 25 ist im Durchgangskanal 29 angeordnet und mittels eines Federringes 27 und einer Mutter 28 an der Linsenfassung 26 befestigt, um einen stabilen Sitz der Fokussierungsoptik 25 zu gewährleisten.

Um eine präzis kontrollierbare Bewegung der Fokussierungsoptik 25 relativ zur Tragstruktur 30 des Wechsel-Moduls gewährleisten zu können, ist die Linsenfassung 26 weiterhin derart geformt, dass sie in dem von der Tragstruktur 30 umgebenen Hohlraum angeordnet und geführt werden kann und ausserdem als eine mit einem Fluid betätigbare Kolbeneinheit der Antriebseinrichtung 40 dienen kann. Zu diesem Zweck ist die Linsenfassung 26 wie folgt ausgebildet:
a) Wie die Fig. 3-6 zeigen, ist die Linsenfassung 26 derart dimensioniert, dass - wenn sie in das Wechsel-Modul 20 eingesetzt ist - das Teilstück 26.1 der Linsenfassung 26 in den ringförmigen Spalt ragt, der zwischen der Hohlraumwand 45 und dem Rohr 34.2 ausgebildet ist, und das Teilstück 26.2 der Linsenfassung 26 in den ringförmigen Spalt ragt, der zwischen der Hohlraumwand 45 und dem Rohr 36.2 ausgebildet ist. Dabei ist das der Verschlussplatte 34 zugewandte Ende der Linsenfassung 26 (Teilstück 26.1) so geformt, dass die Aussenseite der Linsenfassung 26 formschlüssig an der Hohlraumwand 45 anliegt und die Innenseite der Linsenfassung 26 formschlüssig an dem Rohr 34.2 anliegt. Entsprechend ist das der Verschlussplatte 36 zugewandte Ende der Linsenfassung 26 (Teilstück 26.2) so geformt, dass die Aussenseite der Linsenfassung 26 an der Hohlraumwand 45 formschlüssig anliegt und die Innenseite der Linsenfassung 26 an dem Rohr 36.2 formschlüssig anliegt. Die Linsenfassung 26 ist folglich an der Hohlraumwand 45 und an den Rohren 34.2 und 36.2 geführt.
b) Die Erstreckung der Linsenfassung 26 in der Längsrichtung der Seitenwand 32 des Wechsel-Moduls 20 ist so gewählt, dass die Linsenfassung 26 um eine vorgegebene Distanz koaxial zur Ausbreitungsrichtung 5.1 des Laserstrahls entlang der Hohlraumwand 45 bewegbar ist. Um eine Drehung der Linsenfassung 26 zu verhindern, kann ein Stift 48 so in die Seitenwand 32 eingesetzt werden, dass der Stift 48 in eine Nut 48.1 eingreift, welche an einer Seite der Linsenfassung 26 parallel zur optischen Achse der Fokussieroptik 25 ausgebildet ist (Fig. 6).
c) Das der Verschlussplatte 34 zugewandte Ende der Linsenfassung 26 (Teilstück 26.1) bildet eine ringförmige Fläche, die mittels Dichtungen 43 gegenüber der Hohlraumwand 45 und dem Rohr 34.2 abgedichtet ist und als eine erste Kolbenfläche 41.1 der Antriebseinheit 40 dient. Entsprechend bildet das der Verschlussplatte 36 zugewandte Ende der Linsenfassung 26 (Teilstück 26.2) eine ringförmige Fläche, die mittels Dichtungen 43 gegenüber der Hohlraumwand 45 und dem Rohr 36.2 abgedichtet ist und als eine zweite Kolbenfläche 42.1 der Antriebseinheit 40 dient. Die beiden Kolbenflächen 41.1 und 42.1 können - wie im Folgenden näher erläutert wird - mit einem unter Druck stehenden Fluid beaufschlagt werden, um die Linsenfassung 26 relativ zur Tragstruktur 30 bewegen zu können. Die Kolbenflächen 41.1 und 42.1 bzw. die Linsenfassung 26 können deshalb als angetriebene Teile der Antriebseinheit 40 betrachtet werden.

Wie die Fig. 3-6 zeigen, umfasst die Antriebseinheit 40 weiterhin eine erste Druckkammer 41 und eine zweite Druckkammer 42. Die erste Druckkammer 41 ist im Bereich eines ersten Wandabschnitts 45.1 der Hohlraumwand 45 innerhalb des ringförmigen Spalts, der zwischen der Hohlraumwand 45 und dem Rohr 34.2 ausgebildet ist, durch die erste Kolbenfläche 41.1 und die Verschlussplatte 34 begrenzt. Entsprechend ist die zweite Druckkammer 42 im Bereich eines zweiten Wandabschnitts 45.2 der Hohlraumwand 45 innerhalb des ringförmigen Spalts, der zwischen der Hohlraumwand 45 und dem Rohr 36.2 ausgebildet ist, durch die zweite Kolbenfläche 42.1 und die Verschlussplatte 36 abgegrenzt. Die Druckkammern 41 sind derart ausgebildet, dass bei einer Bewegung der Linsenfassung 26 entlang der Hohlraumwand 45 das Volumen der ersten Druckkammer 41 und das Volumen der zweiten Druckkammer 42 gegensinnig vergrössert bzw. verkleinert werden (abhängig von der Richtung der Bewegung).

Die erste Druckkammer 41 kann über eine Einlassöffnung 46.1 in der Seitenwand 32 der Tragstruktur 30 mit einem ersten Fluid gefüllt werden. Entsprechend kann die zweite Druckkammer 42 über eine Einlassöffnung 46.2 in der Seitenwand 32 der Tragstruktur 30 mit einem zweiten Fluid gefüllt werden.

Im vorliegenden Fall sorgen Unterschiede zwischen dem jeweiligen Druck des ersten Fluids in der ersten Druckkammer 41 und dem jeweiligen Druck des zweiten Fluids in der zweiten Druckkammer 42 für eine Verschiebung der Linsenfassung 26 entlang der Ausbreitungsrichtung 5.1 des Laserstrahls 5. Dementsprechend kann durch eine Regelung des Drucks des jeweiligen Fluids in der ersten bzw. zweiten Druckkammer 41 bzw. 42 die Position der Fokussierungsoptik 25 bezüglich der Tragstruktur 30 kontrolliert und um vorgegebene Distanzen entlang der Ausbreitungsrichtung 5.1 des Laserstrahls 5 verändert werden.

Wie die Fig. 3-6 andeutet, umfasst die Antriebseinrichtung 40 (als Versorgungseinrichtung für ein erstes Fluid) eine Druckleitung 80.1 für ein erstes Fluid, welche in den stationären Teil 11 des Bearbeitungskopfes 10 führt. Die Einlassöffnung 46.1 ist derart in der Seitenwand 32 des Wechsel-Moduls 20 angeordnet, dass die Druckleitung 80.1 mit der Einlassöffnung 46.1 bzw. der ersten Druckkammer 41 automatisch in Verbindung steht, wenn das Wechsel-Modul 20 in die stationäre Betriebsposition gebracht ist. Entsprechend umfasst die Antriebseiririchtung 40 (als Versorgungseinrichtung für ein zweites Fluid) eine Druckleitung 80.2 für ein zweites Fluid, welche in den stationären Teil 11 des Bearbeitungskopfes 10 führt. Die Einlassöffnung 46.2 ist derart in der Seitenwand 32 des Wechsel-Moduls 20 angeordnet, dass die Druckleitung 80.2 mit der Einlassöffnung 46.2 bzw. der zweiten Druckkammer 42 automatisch in Verbindung steht, wenn das Wechsel-Modul 20 in die stationäre Betriebsposition gebracht ist.

Wie Fig. 6 andeutet, kann in die Druckleitungen 80.1 und 80.2 jeweils ein Fluid eingeleitet werden, welches aus einer Druckleitung 80 entnommen wird und den Druckleitungen 80.1 und 80.2 über ein steuerbares Regelventil 52 zugeführt werden kann. Das Regelventil 52 kann beispielsweise als Proportionalventil ausgeführt sein, welches es erlaubt, den jeweiligen Druck in den Druckleitungen 80.1 bzw. 80.2 und somit in der ersten Druckkammer 41 bzw. in der zweiten Druckkammer 42 unabhängig voneinander in Abhängigkeit von Steuersignalen zu steuern.

Die Antriebsvorrichtung 40 umfasst weiterhin ein Kontrollsystem 50, welches die Positionierung der Fokussierungsoptik 25 kontrolliert und eine Verstellung der Fokussierungsoptik gemäss entsprechenden Vorgaben der Steuerung der Laserbearbeitungsmaschine 1 (abhängig von dem jeweiligen Bearbeitungsprozess, der von der Laserbearbeitungsmaschine 1 ausgeführt werden soll) zu steuern. Das Kontrollsystem 50 umfasst eine Messeinrichtung 55 zur Bestimmung der Position der Fokussierungsoptik 25 und einen Regler 51. Die Messeinrichtung 55 erzeugt Signale, welche die momentane Position ("Ist-Wert") der Fokussierungsoptik 25 (in Fig. 6 als Zᵢₛₜ dargestellt) repräsentieren. Der Regler 55 hat die Aufgabe, die Signale der Messeinrichtung 55 mit Signalen zu vergleichen, die einen von der Steuerung der Laserbearbeitungsmaschine 1 vorgegebenen Soll-Wert für die Position der Fokussierungsoptik 25 (in Fig. 6 als Zₛₒₗₗ dargestellt) angeben, und - bei einer Abweichung zwischen Soll- und Ist-Wert - mittels geeigneter Signale auf das Regelventil 52 derart einzuwirken, dass die Fokussierungsoptik 25 in die vorgegebene SollPosition gebracht wird.

Wie die Fig. 5 zeigt, kann die Messeinrichtung 55 in das Wechsel-Modul 20 integriert werden. Die Messeinrichtung 55 kann beispielsweise als berührungsloses Messsystem ausgebildet werden, beispielsweise auf der Grundlage eines (beispielsweise mit optischen oder magnetischen Mitteln lesbaren) Massstabs, der an der Linsenfassung 26 angeordnet werden kann, und eines entsprechenden Lesekopfes, der an der Tragstruktur 30 befestigt werden kann und zum Ablesen des Massstabs geeignet ist.

Als erstes bzw. zweites Fluid der Antriebseinrichtung 40 kann beispielsweise ein Gas oder eine geeignete Flüssigkeit dienen. Als Flüssigkeit wäre insbesondere eine Kühlflüssigkeit (beispielsweise deionisiertes Wasser) geeignet, was den Vorteil bietet, dass die Kühlflüssigkeit eine wirksame Kühlung der Linsenfassung 26 bei hohen Laserleistungen gewährleisten kann.

Das Wechsel-Modul 20 ist derart gestaltet, dass Prozessgase aus einem Raum, der an der Austrittsseite des Laserstrahls 5 an die Fokussierungsoptik 25 angrenzt, durch die Austrittsöffnung 36.1 des Wechsel-Moduls 20 und durch die Düse 6 des Bearbeitungskopfes 10 auf das zu bearbeitende Werkstück 2 geleitet werden können.

Um eine Versorgung mit Prozessgas zu gewährleisten, ist in das Wechsel-Modul 20 eine Prozessgas-Kammer 60 integriert, welche mit einem Prozessgas bzw. einem Gemisch von Prozessgasen beflutbar ist. Wie die Fig. 5 zeigt, weist die Linsenfassung 26 an einer einem dritten Wandabschnitt 45.3 der Hohlraumwand 45 gegenüberliegenden Seite einen ersten Wandbereich 61 auf, der zusammen mit dem dritten Wandabschnitt 45.3 der Hohlraumwand 45 die Prozessgas-Kammer 60 begrenzt.

Zur Versorgung mit Prozessgas ist der stationäre Teil 11 des Bearbeitungskopfes 10 mit einer Versorgungseinrichtung 90 verbunden, welche Prozessgas unter einem hohen Druck (beispielsweise 25 bar) zur Verfügung stellt. Die Seitenwand 32 des Wechsel-Moduls 20 weist im Bereich der Prozessgas-Kammer 60 mehrere Einlassöffnungen 62 für das Prozessgas auf. Die Einlassöffnungen 62 sind jeweils derart angeordnet ist, dass sie an die Versorgungseinrichtung 90 für das Prozessgas angeschlossen sind, wenn die Tragstruktur 30 in die stationäre Betriebsposition gebracht ist.

Die Prozessgas-Kammer 60 ist über eine Vielzahl Austrittsöffnungen 63 für das jeweilige Prozessgas mit einem Raumbereich 65 verbunden, der auf der Austrittsseite des Laserstrahls 5 an die Fokussierungsoptik 25 angrenzt und in den über jede der Austrittsöffnungen 63 jeweils ein Prozessgasstrom 64 (in Fig. 4 und 5 für eine der Austrittsöffnungen 63 durch einen Pfeil gekennzeichnet) aus der Prozessgas-Kammer 60 einleitbar ist.

Wie Fig. 5 zeigt, ist der jeweilige Prozessgasstrom 64 auf der Austrittsseite des Laserstrahls 5 auf die Fokussierungsoptik 25 gerichtet und wird von dort in Richtung auf die Austrittsöffnung 36.1 bzw. den Fokus 5' umgelenkt. Da der jeweilige Prozessgasstrom 64 auf die Fokussierungsoptik 25 trifft, kann das Prozessgas beispielsweise zum Kühlen der Fokussierungsoptik 25 genutzt werden.

Da der jeweilige Prozessgasstrom 64 (abhängig von dem jeweiligen Bearbeitungsprozess) unter einem hohen Druck (beispielsweise 25 bar) auf die Fokussierungsoptik 25 trifft, können durch das Prozessgas relativ grosse Kräfte übertragen werden, welche in Richtung auf die Eintrittsöffnung 34.1 im Wesentlichen koaxial zur Ausbreitungsrichtung 5.1 des Laserstrahls wirken.

Die Prozessgas-Kammer 60 ist so gestaltet, dass diese durch das Prozessgas bedingten Kräfte kompensiert werden können. Zu diesem Zweck umfasst der erste Wandbereich 61 der Linsenfassung eine mit dem Prozessgas beaufschlagte Kolbenfläche 61.1, welche derart angeordnet ist, dass Kräfte, die mittels des jeweiligen Prozessgasstroms 64 an der Austrittsseite des Laserstrahls auf die Fokussierungsoptik 26 übertragen werden, durch Kräfte, die mittels des Prozessgases auf die Kolbenfläche 61.1 übertragen werden, ganz oder teilweise kompensiert sind. In welchem Masse die genannten Kräfte kompensiert werden, hängt im Wesentlichen von der Grösse der Kolbenfläche 61.1 im Vergleich zur Fläche der Fokussierungsoptik 25, welche durch das Prozessgas beaufschlagt wird, ab. Durch eine geeignete Wahl der Grösse der Kolbenfläche 61.1 kann somit erreicht werden, dass alle durch das Prozessgas bedingten Kräfte auf die Fokussierungsoptik 25 exakt kompensiert werden.

In diesem Zusammenhang kann als "Zuführung für das Prozessgas" die Gesamtheit der folgenden Komponenten verstanden werden: Die Versorgungseinrichtung 90, die Einlassöffnungen 62, die Prozessgas-Kammer 60 und die Austrittsöffnungen 63 für das Prozessgas.

Als "Kompensationseinrichtung" zur Kompensation der von Prozessgas übertragenen Kräfte kann die Gesamtheit der folgenden Komponenten verstanden werden: Die Prozessgas-Kammer und die Kolbenfläche 61.1.

Die Prozessgas-Kammer 60 ist konzentrisch zur Ausbreitungsrichtung 5.1 des Laserstrahls 5 ausgebildet. Weiterhin weist die mit dem Prozessgas beaufschlagbare Kolbenfläche 61.1 die Form eines bezüglich der Ausbreitungsrichtung 5.1 des Laserstrahls 5 konzentrischen Ringes auf. Da die Prozessgas-Kammer 60 somit koaxial zur Ausbreitungsrichtung 5.1 des Laserstrahls und zudem ringförmig um die Fokussieroptik 25 herum angeordnet ist, können durch diese Anordnung die auf die Kolbenfläche 61.1 übertragenen Kräfte gleichmässig über den Umfang der Fokussierungsoptik 25 verteilt und somit prozessgasbedingte Störkräfte effizient eliminiert werden.

Die Anordnung der Prozessgas-Kammer 60 hat weiterhin Vorteile im Hinblick auf Prozessgas-Wechsel, d.h. den Ersatz eines in einem ersten Bearbeitungsschritt verwendeten ersten Prozessgases durch ein zweites (verschiedenes) Prozessgas in einem zweiten (folgenden) Bearbeitungsschritt. Die Prozessgas-Kammer 60 wird von dem jeweiligen Prozessgas auf dessen Weg zu den Austrittsöffnungen 63 jeweils durchströmt. Bei einem Prozessgas-Wechsel von dem ersten Prozessgas zu dem zweiten Prozessgas wird die Prozessgas-Kammer 60 von dem zweiten Prozessgas "gespült", mit dem Effekt, dass nach relativ kurzer Zeit keine Rückstände des ersten Prozessgases mehr vorhanden sind. Die Prozessgas-Kammer 60 bildet somit keinen "toten" Raum, in dem Reste des ersten Prozessgases über eine lange Zeit gespeichert werden können. Eine lange andauernde Verunreinigung des zweiten Prozessgases durch das erste Prozessgas kann nach einem Prozessgas-Wechsel somit vermieden werden bzw. eine spezielle Reinigung (Spülung) der Prozessgas-Kammer 66 vor einem Prozessgas-Wechsel kann innerhalb kurzer Zeit durchgeführt werden.

Das Wechsel-Modul 20 ist derart gestaltet, dass die Fokussierungsoptik 25 auf der Eintrittsseite des Laserstrahls 5 mit einem Gas beaufschlagt werden kann, beispielsweise zum Reinigen und/oder zum Kühlen der Fokussierungsoptik 25.

Um eine Zufuhr dieses Gases zu gewährleisten, ist in das Wechsel-Modul 20 ein Gasraum 70 integriert, welcher mit Gas, beispielsweise gereinigter Luft, beflutbar ist. Wie die Fig. 5 zeigt, weist die Linsenfassung 26 an einer einem vierten Wandabschnitt 45.4 der Hohlraumwand 45 gegenüberliegenden Seite einen zweiten Wandbereich 71 auf, der zusammen mit dem vierten Wandabschnitt 45.4 der Hohlraumwand 45 den Gasraum 70 begrenzt. Wie die Fig. 3-6 zeigen, ist der Gasraum 70 von der Prozessgas-Kammer 60 durch eine (ringförmig bezüglich der Ausbreitungsrichtung 5.1 des Laserstrahls 5) ausgebildete Trennwand 47 getrennt, welche gegenüber der Linsenfassung 26 durch eine Dichtung 43 abgedichtet ist.

Zur Versorgung des Gasraums 70 mit einem Gas ist der stationäre Teil 11 des Bearbeitungskopfes 10 mit einer Versorgungseinrichtung 95 verbunden, welche das benötigte Gas unter einem Überdruck zur Verfügung stellt. Die Seitenwand 32 des Wechsel-Moduls 20 weist im Bereich der Prozessgas-Kammer 70 mehrere Einlassöffnungen 72 für das jeweilige Gas auf. Die Einlassöffnungen 72 sind jeweils derart angeordnet, dass sie an die Versorgungseinrichtung 95 angeschlossen sind, wenn die Tragstruktur 30 in die stationäre Betriebsposition gebracht ist.

Der Gasraum 70 ist über eine Vielzahl Austrittsöffnungen 73 für das jeweilige Gas mit einem Raumbereich 75 verbunden, der auf der Eintrittsseite des Laserstrahls 5 an die Fokussierungsoptik 25 angrenzt und in den über jede der Austrittsöffnungen 73 jeweils ein Gasstrom 74 (in Fig. 4 und 5 für eine der Austrittsöffnungen 73 durch einen Pfeil gekennzeichnet) aus dem Gasraum 70 einleitbar ist.

Wie Fig. 5 zeigt, ist der jeweilige Gasstrom 74 auf der Eintrittsseite des Laserstrahls 5 auf die Fokussierungsoptik 25 gerichtet. Da der jeweilige Gasstrom 74 auf die Fokussierungsoptik 25 trifft, kann das Gas beispielsweise zum Reinigen und/oder Kühlen der Fokussierungsoptik 25 genutzt werden.

Da der jeweilige Gasstrom 74 unter einem Überdruck auf die Fokussierungsoptik 25 trifft, können durch das Gas relativ grosse Kräfte übertragen werden, welche in Richtung auf die Austrittsöffnung 36.1 im Wesentlichen koaxial zur Ausbreitungsrichtung 5.1 des Laserstrahls wirken.

Der Gasraum 70 ist so gestaltet, dass diese durch das Gas bedingten Kräfte kompensiert werden können. Zu diesem Zweck umfasst der zweite Wandbereich 71 der Linsenfassung 26 eine mit dem Gas beaufschlagte Kolbenfläche 71.1 (die äusseren Ränder der Kolbenfläche sind in Fig. 4 und 5 durch Pfeile gekennzeichnet), welche derart angeordnet ist, dass Kräfte, die mittels des jeweiligen Gasstroms 74 an der Eintrittsseite des Laserstrahls 5 auf die Fokussierungsoptik 25 übertragen werden, durch Kräfte, die mittels des Gases auf die Kolbenfläche 71.1 übertragen werden, ganz oder teilweise kompensiert sind. In welchem Masse die genannten Kräfte kompensiert werden, hängt im Wesentlichen von der Grösse der Kolbenfläche 71.1 im Vergleich zur Fläche der Fokussierungsoptik 25, welche durch das Gas beaufschlagt wird, ab. Durch eine geeignete Wahl der Grösse der Kolbenfläche 71.1 kann somit erreicht werden, dass alle durch das Gas bedingten Kräfte auf die Fokussierungsoptik 25 exakt kompensiert werden.

In diesem Zusammenhang kann als "Zuführung für das Gas" die Gesamtheit der folgenden Komponenten verstanden werden: die Versorgungseinrichtung 95, die Einlassöffnungen 72, der Gasraum 70 und die Austrittsöffnungen 73 für das Gas.

Als "Kompensationseinrichtung" zur Kompensation der von dem Gas übertragenen Kräfte kann die Gesamtheit der folgenden Komponenten verstanden werden: der der Gasraum 70 und die Kolbenfläche 71.1.

Der Gasraum 70 ist konzentrisch zur Ausbreitungsrichtung 5.1 des Laserstrahls 5 ausgebildet. Weiterhin weist die mit dem Gas beaufschlagbare Kolbenfläche 71.1 die Form eines bezüglich der Ausbreitungsrichtung 5.1 des Laserstrahls 5 konzentrischen Ringes auf. Da der Gasraum 70 somit koaxial zur Ausbreitungsrichtung 5.1 des Laserstrahls und zudem ringförmig um die Fokussieroptik 25 herum angeordnet ist, können durch diese Anordnung die auf die Kolbenfläche 71.1 übertragenen Kräfte gleichmässig über den Umfang der Fokussierungsoptik 25 verteilt werden und somit die durch das Gas bedingten Störkräfte effizient eliminiert werden.

## Patentansprüche

1. Bearbeitungskopf (10) für eine Laserbearbeitungsmaschine (1) zur Bearbeitung eines Werkstücks (2) mittels eines Laserstrahls (5),
mit einer Fokussierungsoptik (25) zur Fokussierung des Laserstrahls,
mit einer Antriebseinrichtung (40) zum Bewegen und/oder Verstellen der Fokussierungsoptik (25), die als fluidischer (40) Antrieb ausgebildet ist,
mit einer Zuführung (90, 62, 60, 63) für ein unter einem Druck stehendes Prozessgas, welche mindestens eine Austrittsöffnung (63) für das Prozessgas aufweist, wobei das Prozessgas zu der Austrittsöffnung leitbar (63) und aus der Zuführung durch die Austrittsöffnung (63) in Form eines Prozessgasstroms (64) in einen an die Fokussierungsoptik (25) angrenzenden Raumbereich (65) einleitbar ist,
wobei die Austrittsöffnung (63) der Zuführung (90, 62, 60, 63) derart angeordnet ist, dass der Prozessgasstrom (64) zur Beeinflussung eines von einem Laserstrahl induzieren Bearbeitungsprozesses der Laserbearbeitungsmaschine in einen Raumbereich (65) einleitbar ist, weicher an die Fokussierungsoptik (25) an der Austrittsseite des Laserstrahls (5) angrenzt,
mit einer Kompensationseinrichtung (60, 61.1) zur Kompensation von Kräften, die von dem Prozessgasstrom (64) auf die Fokussierungsoptik (25) übertragbar sind,
welche Kompensationseinrichtung (60, 61.1) eine mit dem Prozessgas beflutbare Prozessgas-Kammer (60) und eine in der Prozessgas-Kammer bewegbare, mit dem Prozesegas beaufschlagbare und mit der Fokussierungsoptik starr verbundene Kolbenfläche (61.1) umfasst,
wobei die Kolbenfläche (61.1) derart angeordnet ist, dass Kräfte, die mittels des Prozessgasstroms (64) auf die Fokussierungsoptik (25) übertragbar sind, durch Kräfte, die mittels des Prozessgases auf die Kolbenfläche (61.1) übertragbar sind, ganz oder teilweise kompensiert sind,
und wobei die Prozessgas-Kammer (60) in die Zuführung (90, 62, 60, 63) derart integriert ist, dass die Prozessgas-Kammer (60) mit zu der Austrittsöffnung (63) geleitetem Prozessgas durch mindestens eine Eintrittsöffnung (62) der Prozesegas-Kammer (60) beflutbar ist, wobei das Prozessgas nach Durchqueren der Eintrittsöffnung die Prozessgas-Kammer (60) durchströmen muss, um zu der Austrittsöffnung (63) zu gelangen,
und wobei die Prozessgas-Kammer (60) konzentrisch zur Ausbreitungsrichtung (5.1) des Laserstrahls ausgebildet ist und die mit dem Prozessgas beaufschlagbare Kolbenfläche (61.1) die Form eines bezüglich der Ausbreitungsrichtung (5.1) des Laserstrahls (5) konzentrischen Ringes aufweist,
**dadurch gekennzeichnet, dass**
der Bearbeitungskopf (10) umfasst:
eine weitere Zuführung (95, 72, 70, 73) für ein unter einem Druck stehendes Gas, welche mindestens eine Austrittsöffnung (73) für das Gas aufweist, wobei dieses Gas zu der Austrittsöffnung leitbar (73) und aus der weiteren Zuführung durch die Austrittsöffnung in Form eines Gasstroms (74) in einen an die Fokussierungsoptik (25) angrenzenden Raumbereich (65, 75) einleitbar ist,
wobei die Austrittsöffnung (73) der weiteren Zuführung (95, 72, 70, 73) derart angeordnet ist, dass der Gasstrom (74) in einen Raumbereich (75) einleitbar ist, welcher an die Fokussierungsoptik (25) an der Eintrittsseite des Laserstrahls (5) angrenzt,
und wobei eine weitere Kompensationseinrichtung (70, 71.1) zur Kompensation von Kräften, die von dem Gasstrom (74) auf die Fokussierungsoptik (25) übertragbar sind, vorgesehen ist,
welche weitere Kompensationseinrichtung (70, 71.1) eine mit dem Gas beflutbare Gas-Kammer (70) und eine in der Gas-Kammer bewegbare, mit dem Gas beaufschlagbare und mit der Fokussierungsoptik starr verbundene Kolbenfläche (71.1) umfasst,
wobei die Kolbenfläche (71.1) derart angeordnet ist, dass Kräfte, die mittels des Gasstroms (74) auf die Fokussierungsoptik (25) übertragbar sind, durch Kräfte, die mittels des Gases auf die Kolbenfläche (71,1) übertragbar sind, ganz oder teilweise kompensiert sind,
und wobei die Gas-Kammer (70) in die weitere Zuführung (95, 72, 70, 73) derart integriert ist, dass die Gas-Kammer (70) mit zu der Austrittsöffnung (73) geleitetem Gas durch mindestens eine Eintrittsöffnung (72) der Gas-Kammer (70) beflutbar ist, wobei das Gas nach Durchqueren der Eintrittsöffnung die Gas-Kammer (70) durchströmen muss, um zu der Austrittsöffnung (73) zu gelangen,
und wobei die Gas-Kammer (70) konzentrisch zur Ausbreitungsrichtung (5.1) des Laserstrahls ausgebildet ist und die mit dem Gas beaufschlagbare Kolbenfläche (71.1) die Form eines bezüglich der Ausbreitungsrichtung (5.1) des Laserstrahls (5) konzentrischen Ringes aufweist.

2. Bearbeitungskopf nach Anspruch 1, wobei
die jeweilige Austrittsöffnung (63; 73) in einem vorgegebenen Abstand zur Fokussierungsoptik (25) angeordnet ist, so dass die räumliche Anordnung der Austrittsöffnung relativ zur Fokussierungsoptik nicht veränderbar ist, falls die Fokussierungsoptik bewegt bzw. verstellt wird.

3. Bearbeitungskopf nach einem der vorangegangenen Ansprüche, wobei der Bearbeitungskopf (10) einen stationären Teil (11) und ein auswechselbares Wechsel-Modul (20) umfasst,
welches Wechsel-Modul (20) als Ganzes von dem stationären Teil (11) trennbar ist, und
wobei das Wechsel-Modul die Fokussierungsoptik (25) und die Kompensationseinrichtungen (60, 61.1; 70, 71.1) umfasst.

4. Bearbeitungskopf nach Anspruch 3,
wobei die Antriebseinrichtung (40) mindestens ein angetriebenes Teil (41.1; 42.1) umfasst, und
das Wechsel-Modul (20) die jeweiligen angetriebenen Teile (41.1; 42.1) der Antriebseinrichtung (40) umfasst.

5. Laserbearbeitungsmaschine mit einem Bearbeitungskopf nach einem der Ansprüche 1-4.

## Claims

1. A machining head (10) for a laser machining machine (1) for machining a workpiece (2) by means of a laser beam (5),
having focussing optics (25) for focussing the laser beam,
having a drive apparatus (40) for moving and/or adjusting the focussing optics (25), which is constructed as a fluid (40) drive,
having a supply (90, 62, 60, 63) for a pressurised process gas, which has at least one outlet opening (63) for the process gas, wherein the process gas can be conveyed to the outlet opening (63) and can be fed out of the supply through the outlet opening (63) in the form of a process gas stream (64) into a space (65) adjoining the focussing optics (25),
wherein the outlet opening (63) of the supply (90, 62, 60, 63) is arranged in such a manner that the process gas stream (64) can be introduced into a space (65) for influencing a machining process of the laser machining machine induced by a laser beam, which space adjoins the focussing optics (25) on the outlet side of the laser beam (5),
having a compensation apparatus (60, 61.1) for compensating forces, which can be transferred from the process gas stream (64) to the focussing optics (25),
which compensation apparatus (60, 61.1) comprises a process gas chamber (60), which can be flooded with the process gas, and a piston surface (61.1), which can be moved in the process gas chamber, can be loaded with the process gas and is rigidly connected to the focussing optics,
wherein the piston surface (61.1) is arranged in such a manner that forces, which can be transferred onto the focussing optics (25) by means of the process gas stream (64), are entirely or partially compensated by forces, which can be transferred by means of the process gas onto the piston surface (61.1),
and wherein the process gas chamber (60) is integrated into the supply (90, 62, 60, 63) in such a manner that the process gas chamber (60) can be flooded through at least one inlet opening (62) of the process gas chamber (60) with process gas conveyed to the outlet opening (63), wherein the process gas must flow through the process gas chamber (60) after crossing the inlet opening, in order to reach the outlet opening (63),
and wherein the process gas chamber (60) is constructed concentrically to the propagation direction (5.1) of the laser beam, and the piston surface (61.1) that can be loaded with the process gas has the shape of a ring, which is concentric with respect to the propagation direction (5.1) of the laser beam (5),
**characterised in that**
the machining head (10) comprises:
a further supply (95, 72, 70, 73) for a pressurised gas, which has at least one outlet opening (73) for the gas, wherein this gas can be conveyed to the outlet opening (73) and can be fed out of the further supply through the outlet opening in the form of a gas stream (74) into a space (65, 75) adjoining the focussing optics (25),
wherein the outlet opening (73) of the further supply (95, 72, 70, 73) is arranged in such a manner that the gas stream (74) can be introduced into a space (75), which adjoins the focussing optics (25) on the inlet side of the laser beam (5),
and wherein a further compensation apparatus (70, 71.1) for compensating forces, which can be transferred from the gas stream (74) to the focussing optics (25), is provided,
which further compensation apparatus (70, 71.1) comprises a gas chamber (70), which can be flooded with the gas, and a piston surface (71.1), which can be moved in the gas chamber, can be loaded with the gas and is rigidly connected to the focussing optics,
wherein the piston surface (71.1) is arranged in such a manner that forces, which can be transferred onto the focussing optics (25) by means of the gas stream (74), are entirely or partially compensated by forces, which can be transferred by means of the gas onto the piston surface (71.1),
and wherein the gas chamber (70) is integrated into the further supply (95, 72, 70, 73) in such a manner that the gas chamber (70) can be flooded through at least one inlet opening (72) of the gas chamber (70) with gas conveyed to the outlet opening (73), wherein the gas must flow through the gas chamber (70) after crossing the inlet opening, in order to reach the outlet opening (73),
and wherein the gas chamber (70) is constructed concentrically to the propagation direction (5.1) of the laser beam, and the piston surface (71.1) that can be loaded with the gas has the shape of a ring, which is concentric with respect to the propagation direction (5.1) of the laser beam (5).

2. The machining head according to claim 1, wherein
the respective outlet opening (63; 73) is arranged at a predetermined distance from the focussing optics (25), so that the spatial arrangement of the outlet opening relatively to the focussing optics cannot be changed, in the event that the focussing optics are moved or adjusted.

3. The machining head according to one of the preceding claims, wherein
the machining head (10) comprises a stationary part (11) and a replaceable interchangeable module (20),
which interchangeable module (20) can be separated from the stationary part (11) as a whole, and
wherein the interchangeable module comprises the focussing optics (25) and the compensation apparatuses (60, 61.1; 70, 71.1).

4. The machining head according to claim 3,
wherein the drive apparatus (40) comprises at least one driven part (41.1; 42.1), and
the interchangeable module (20) comprises the respective driven parts (41.1; 42.1) of the drive apparatus (40).

5. A laser machining machine with a machining head according to one of claims 1 - 4.

## Revendications

1. Tête d'usinage (10) pour une machine d'usinage à laser (1) pour usiner une pièce (2) au moyen d'un rayon laser (5),
avec un système optique de focalisation (25) pour focaliser le rayon laser,
avec un système d'entraînement (40) pour déplacer et/ou régler le système optique de focalisation (25), qui est constitué comme entraînement fluidique (40),
avec un système d'alimentation (90, 62, 60, 63) pour un gaz de traitement sous pression, lequel comporte au moins une ouverture de sortie (63) pour le gaz de traitement, le gaz de traitement pouvant être dirigé vers l'ouverture de sortie (63) et pouvant être introduit depuis le système d'alimentation par l'ouverture de sortie (63) sous la forme d'un flux de gaz de traitement (64) dans une zone d'espace (65) adjacente au système optique de focalisation (25),
dans laquelle l'ouverture de sortie (63) du système d' alimentation (90, 62, 60, 63) est disposée de telle sorte que le flux de gaz de traitement (64) destiné à influencer un processus d'usinage induit par un rayon laser de la machine d'usinage à laser peut être introduit dans une zone d'espace (65), laquelle est limitrophe du système optique de focalisation (25) sur le côté sortie du rayon laser (5),
avec un système de compensation (60, 61.1) pour compenser des forces qui peuvent être transmises par le flux de gaz de traitement (64) au système optique de focalisation (25),
lequel système de compensation (60, 61.1) comprend une chambre de gaz de traitement (60) remplissable avec le gaz de traitement et une surface de piston (61.1) mobile dans la chambre de gaz de traitement, sollicitable avec le gaz de traitement et raccordée rigidement au système optique de focalisation,
dans laquelle la surface de piston (61.1) est disposée de telle sorte que des forces qui peuvent être transmises au système optique de focalisation (25) au moyen du flux de gaz de traitement (64), sont compensées entièrement ou en partie par des forces qui peuvent être transmises à la surface de piston (61.1) au moyen du gaz de traitement,
et dans laquelle la chambre de gaz de traitement (60) est intégrée dans le système d'alimentation (90, 62, 60, 63) de telle manière que la chambre de gaz de traitement (60) peut être remplie avec le gaz de traitement dirigé vers l'ouverture de sortie (63) par au moins une ouverture d'entrée (62) de la chambre de gaz de traitement (60), dans laquelle le gaz de traitement doit, après traversée de l'ouverture d'entrée, traverser la chambre de gaz de traitement (60) pour parvenir à l'ouverture de sortie (63),
et dans laquelle la chambre de gaz de traitement (60) est constituée de façon concentrique à la direction de propagation (5.1) du rayon laser, et la surface de piston (61.1) sollicitable par le gaz de traitement présente la forme d'un anneau concentrique par rapport à la direction de propagation (5.1) du rayon laser (5),
**caractérisée en ce que**
la tête d'usinage (10) comprend :
un autre système d'alimentation (95, 72, 70, 73) pour un gaz sous pression, lequel comporte au moins une ouverture de sortie (73) pour le gaz, ce gaz pouvant être dirigé vers l'ouverture de sortie (73) et pouvant, à partir de l'autre système d'alimentation être introduit par l'ouverture de sortie sous la forme d'un flux de gaz (74) dans une zone d'espace (65, 75) adjacente au système optique de focalisation (25),
dans laquelle l'ouverture de sortie (73) de l'autre système d'alimentation (95, 72, 70, 73) est disposée de telle sorte que le flux de gaz (74) peut être introduit dans une zone d'espace (75), laquelle est limitrophe du système optique de focalisation (25) sur le côté d'entrée du rayon laser (5),
et dans laquelle un autre système de compensation (70, 71.1) est prévu pour compenser des forces qui peuvent être transmises par le flux de gaz (74) au système optique de focalisation (25),
lequel autre système de compensation (70, 71.1) comprend une chambre de gaz (70) remplissable avec le gaz et une surface de piston (71.1) mobile dans la chambre de gaz, sollicitable avec le gaz et raccordée rigidement au système optique de focalisation,
dans laquelle la surface de piston (71.1) est disposée de telle manière que des forces, qui peuvent être transmises au système optique de focalisation (25) au moyen du flux de gaz (74) sont compensées complètement ou en partie par des forces qui peuvent être transmises à la surface de piston (71.1) au moyen du gaz,
et dans laquelle le chambre de gaz (70) est intégrée dans l'autre système d'alimentation (95, 72, 70, 73) de telle manière que la chambre de gaz (70) peut être remplie avec le gaz dirigé vers l'ouverture de sortie (73) par au moins une ouverture d'entrée (72) de la chambre de gaz (70), dans laquelle le gaz doit après traversée de l'ouverture d'entrée, traverser la chambre de gaz (70) pour parvenir à l'ouverture de sortie (73),
et dans laquelle la chambre de gaz (70) est constituée de façon concentrique à la direction de propagation (5.1) du rayon laser, et la surface de piston (71.1) sollicitable avec le gaz présente la forme d'un anneau concentrique par rapport à la direction de propagation (5.1) du rayon laser (5).

2. Tête d'usinage selon la revendication 1, dans laquelle
l'ouverture de sortie (63 ; 73) respective est disposée à une distance prédéterminée du système optique de focalisation (25) de sorte que la disposition spatiale de l'ouverture de sortie n'est pas modifiable par rapport au système optique de focalisation au cas où le système optique de focalisation est déplacé ou réglé.

3. Tête d'usinage selon l'une quelconque des revendications précédentes, dans laquelle
la tête d'usinage (10) comprend une partie fixe (11) et un module d'échange (20)interchangeable,
lequel module d'échange (20) est séparable de la partie fixe (11) en tant qu'ensemble, et
dans laquelle le module d'échange comprend le système optique de focalisation (25) et les systèmes de compensation (60, 61.1 ; 70, 71.1).

4. Tête d'usinage selon la revendication 3,
dans laquelle le système d'entraînement (40) comprend au moins une partie entraînée (41.1 ; 42.1), et
le module d'échange (20) comprend les parties entraînées respectives (41.1 ; 42.1) du système d'entraînement (40).

5. Machine d'usinage au laser avec une tête d'usinage selon l'une quelconque des revendications 1 - 4.
